# FASCICULE DE BREVET EUROPEEN

(11) **EP 1 669 282 B1**
(45) Date de publication et mention de la délivrance du brevet: **22.08.2007**
(21) Numéro de dépôt: 03758118.8
(22) Date de dépôt: 14.10.2003
(51) Int. Cl.: B62K 3/04, B62K 25/12

(54) **SUSPENSION ARRIERE POUR BICYCLETTES**
HINTERRADAUFHÄNGUNG FÜR FAHRRAD
BICYCLE REAR SUSPENSION

(30) Priorité: 01.10.2003 ES 200302265
(43) Date de publication de la demande: 14.06.2006
(73) Titulaire: Orbea, S. Coop. Ltda., 48269 Mallabia (Vizcaya) (ES)
(72) Inventeur: NARBAIZA GÓMEZ, Xabier, 48269 Mallabia (Bizkaia) (ES)
(74) Mandataire: Urizar Barandiaran, Miguel Angel
(86) Numéro de dépôt international: PCT/ES2003/000520
(87) Numéro de publication internationale: WO 2005/030565

(56) Documents cités:
- DE-A1- 19 644 105
- FR-A1- 2 464 875
- GB-A- 220 760
- US-A- 6 086 080
- US-A- 6 161 858
- US-B1- 6 170 845
- ORBEA WEBSITE, [Online] XP002999033 Retrieved from the Internet: <URL:http://www.orbea.com>

## Description

On connaît des systèmes pour obtenir des suspensions arrière de vélos, de ceux qui comprennent un cadre, un quadrilatère articulé assemblé par ses extrémités au cadre, un tirant qui relie l'axe de la roue arrière au quadrilatère articulé et qui transmet les ondulations du terrain, et un amortisseur, qui relie le cadre au quadrilatère articulé, afin d'amortir cette transmission.

Citons, à titre d'exemples, les Brevets US6170845, WO97/43166, US6164676 et bien d'autres.

Mais les suspensions connues ne sont pas appropriées, car trop dures, trop molles, par manque de polyvalence et l'utilisateur souhaite une suspension arrière offrant différentes possibilités en fonction du terrain, qui soit simple et douce, sans rudesse.

Le demandeur a étudié l'emplacement précis des points d'assemblage du quadrilatère articulé au cadre du vélo, notamment le point d'ancrage supérieur et les ratios qui doivent être remplis pour permettre une suspension au goût de l'utilisateur.

Le demandeur a étudié les suspension arrière de vélos déjà existants et il considère que la caractérisation et la quantitification de la bonté d'une suspension dépendent des critères suivants, (a) étant le rapport entre la course en hauteur de l'axe de la roue arrière et la course de l'amortisseur, et (b) étant la course de l'amortisseur:
1.- Il faut qu'il y ait en toutes circonstances: a/b < 3.
   En représentant la courbe f (OY = a/b); OX = b) sur des axes cartésiens, on aura:
2.- Lorsque le point d'ancrage est le plus en avant possible (vers la roue avant), il faut qu'il y ait:
   3-1 : 2'5 < a/b < 3
   3-2 : la courbe f tend à devenir une droite.
3.- Lorsque le point d'ancrage est le plus en arrière possible (vers la roue arrière), il faut qu'il y ait:
   2₁) a/b < 3, en même temps que
   2₂) la pente de la courbe f sera, de préférence, négative au début et convexe dans l'ensemble.

Le demandeur a mis au point une suspension arrière qui remplit ces conditions. Cette suspension est définie dans la revendication 1. Des formes particulières de réalisation sont définies dans les revendications dépendantes.

Plus concrètement, la suspension objet de l'invention dispose de:
a) un cadre à structure triangulaire avec un tube en forme de V, un tube selle et un tube diagonal à l'embranchement duquel on dispose l'axe du pédalier;
b) un quadrilatère articulé constitué par:
   b₁) un bras basculant avec un point de pivotement sur le tube diagonal, qui constitue le centre des coordonnées cartésiennes des éléments suivants :
   b₂) une petite bielle de 40 mm. de long reliée, en pivotant, à l'extrémité du bras basculant et de l'autre à :
   b₃) une grande bielle de 108 mm. de long, qui est reliée en pivotant au cadre;
c) un amortisseur assemblé, par une extrémité, au point d'assemblage de la petite et de la grande bielles et, par l'autre extrémité, au tube ne forme de V, à proximité du sommet du V et, dans les coordonnées cartésiennes, X = 131 mm. Y = 269'5 mm.

Il se caractérise également par le fait que l'assemblage de la grande bielle avec le cadre se fait en un point d'ancrage supérieur, qui est un assemblage à course coulissante et pouvant être fixé à volonté sur différents sièges.

Il se caractérise également par le fait que le siège inférieur de l'ancrage supérieur à pour coordonnées X = - 90 mm.; Y = 247 mm., ce qui correspond à la position la plus en arrière de l'ancrage supérieur.

Il se caractérise également par le fait que le siège supérieur de la platine a pour coordonnées X = -50 mm; Y = 280 mm., ce qui correspond à la position la plus en avant de l'ancrage supérieur.

Il se caractérise également par le fait que l'amortisseur est pneumatique, la distance OA entre le centre des coordonnées et l'assemblage pivotant entre le bras basculant et la petite bielle étant de 177 mm.

Il se caractérise également par le fait que la disposition relative des éléments, le choix des points d'ancrage et le dimensionnement de la suspension de l'invention font que la suspension soit originale, bien plus commode, appropriée et polyvalente que ce qui était connu jusqu'à présent.

Pour mieux comprendre l'objet de la présente invention, on a représenté sur les plans une forme préférentielle de réalisation pratique, susceptible de changements accessoires qui n'en dénaturent pas le fondement.

La figure 1 est une représentation schématique d'une réalisation pratique de la suspension arrière, qui fait l'objet de l'invention.

La figure 2 est une représentation en coordonnées cartésiennes (X, Y) des dimensions et du positionnement des éléments entre eux de la suspension de la figure 1.

La figure 3a est une représentation du fonctionnement mécanique d'une suspension arrière connue en coordonnées cartésiennes, l'axe OY étant le rapport entre la course (a) en hauteur de l'axe (D) de la roue arrière et la course de l'amortisseur (9) et l'axe OX étant la course (b) de l'amortisseur (9), pour un ancrage du point (C) le plus en avant possible.

La figure 3b est une représentation similaire à la figure 3^{a}, pour un ancrage du point (C) le plus bas /en arrière possible.

La figure 4a est une représentation similaire à la figure 3^{a}, conformément à la suspension arrière de l'invention, avec un amortisseur à ressort et un point d'ancrage (C) le plus en avant possible.

La figure 4b est la figure 4a avec le point d'ancrage (C) le plus en arrière possible.

La figure 5a est une représentation similaire à la figure 4a avec un amortisseur à air.

La figure 5b est la figure 5a avec le point d'ancrage (C) le plus en arrière possible.

La figure 6 est una representation en éclaté des éléments du dispositif de fermeture pour le point d'ancrage supérieur (C).

On décrit ci-dessous un exemple de réalisation pratique, non limitative, de la présente invention.

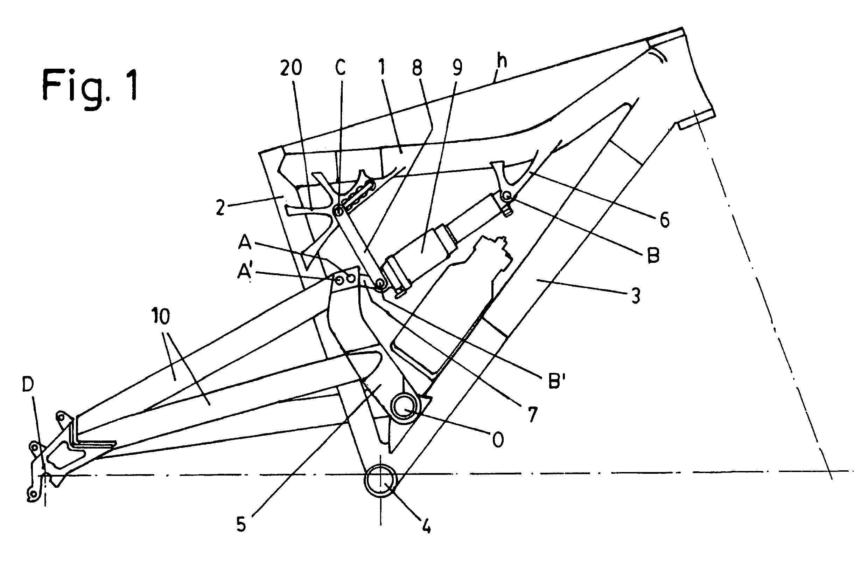

Sur la figure 1 on apprécie un cadre ayant une structure tubulaire, qui se compose d'un tube diagonal (3), d'un tube horizontal (1) et d'un tube selle (2).

Le tube horizontal (1) sera, de préférence, en forme de V, car, comme on le verra plus tard, le point de pivotement (B) demeure très éloigné par rapport à ce qui est connu jusqu'à maintenant, de la ligne (h) théorique du tube horizontal, ce qui obligerait à mettre un bossage (6) excessivement grand à partir du tube (1).

L'embranchement du tube (2) selle avec le tube diagonal (3) est destiné à l'axe du pédalier (4).

On dispose un quadrilatère articulé, qui est constitué essentiellement de trois éléments : bras basculant (5), petite bielle (7), grande bielle (8), qui s'articulent comme on l'indique ci-après :
Le bras basculant (5) avec un point de pivotement (0) sur le tube diagonal (3), ce point (0) constituant le centre des coordonnées cartésiennes (X, Y) pour la disposition et le dimensionnement du reste des éléments de la suspension.
La petite bielle (7) est assemblée (A), d'une façon pivotante, par une de ses extrémités, au bras basculant (5) et, de l'autre, elle est assemblée (B) à une grande bielle (8).
Conformément à l'invention, la petite bielle (7) a une longueur de 40 mm., alors que celles qui étaient connues jusqu'à présent avaient 25 mm., ce qui suppose une différence de 60%, et la grande bielle (8) a, conformément à l'invention, une longueur de 108 mm., alors que celles qui étaient connues jusqu'à présent avaient 102 mm., autrement dit, une augmentation de 6%.
La bielle (8) est unit au cadre en un point (C) d'ancrage supérieur.
Conformément à l'invention, la position du point (C) nous oblige à le disposer sur un bossage (20) qui est assemblé au tube (1) en forme de V et au tube de la selle (2).

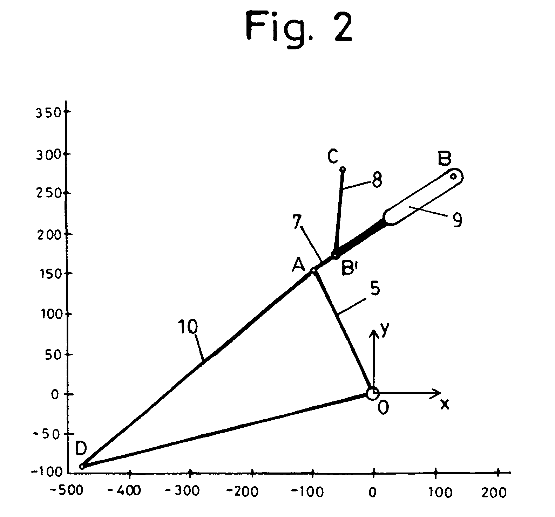

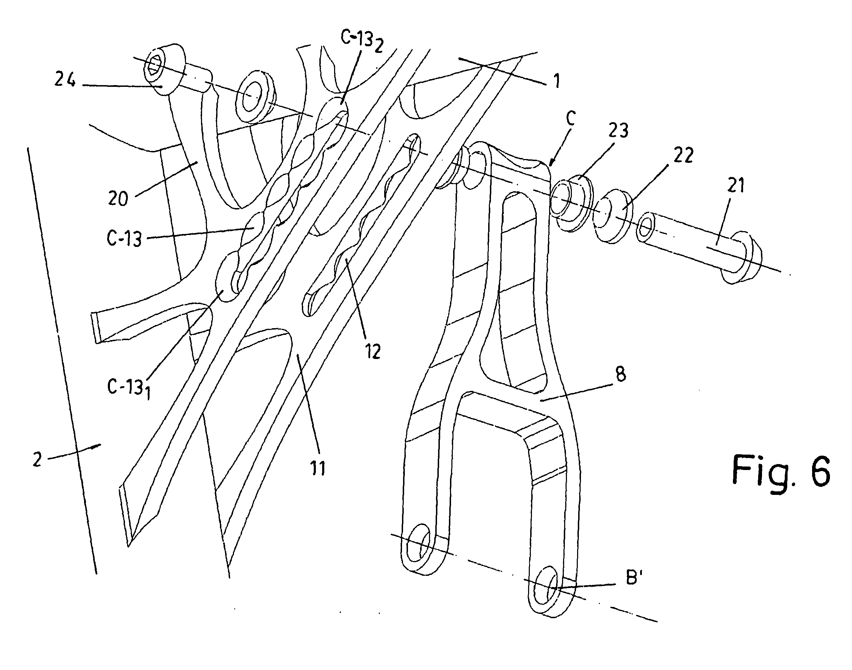

L'ancrage supérieur (C) peut être fixé en diverses positions, la position la plus en arrière (C-13₁) étant définie, conformément à l'invention, par les coordonnées X = - 90 mm. ; Y = 247 mm. et la position la plus en avant (C-13₂) par les coordonnées X = -50 ; Y = 280 mm. (figures 2 et 6).

Sur le bras basculant (5), on dispose de plusieurs points (A), (A') pour l'assemblage pivotant avec la petite bielle (7).

On dispose un amortisseur (9) à ressort ou à air, relié par une extrémité à l'assemblage (B') de la petite bielle (7) avec la grande bielle (8) et, par son autre extrémité, (B), au tube (1) en forme de V au moyen d'un bossage (6) qui fait saillie approximativement à proximité du sommet du V et avec les coordonnées X = 131 mm.; Y = 269'5 mm.

L'amortissement est transmis au moyen de tirant(s) (10) reliant le bras basculant (5) à l'axe (D) de la roue arrière.

Pour obtenir le point d'ancrage supérieur (C), le demandeur a mis au point un dispositif de fermeture, qui suppose des avantages significatifs vis-à-vis des options connues, parmi lesquelles nous signalerions les suivantes:
1.- Le dispositif permet de repositionner la goupille (21) supérieure dans les différentes positions, tout simplement en dévissant suffisamment (minimum: 6 mm) pour pouvoir sauter d'une position à la suivante.
2.- Le système est autocentrant.
3.- Tous les jeux possibles sont éliminés grâce à un couple de serrage minimum.
4.- Les usinages n'ont pas besoin d'une grande précision, sauf pour ajuster la tige-orifice intérieur des rondelles (22).
5.- La surface de contact pour répartir sur le cadre les forces dues à la grande bielle (8), est supérieure à celle des options connues.
6.- Les coussinets Glycodur (23) sont assemblés solidairement à la grande bielle (8), grâce à l'existence d'un ajustement HK. Leur mission consiste à faciliter la rotation relative entre goupille (21) et grande bielle (8).

En supposant le dispositif parfaitement fermé, la clé du fonctionnement consiste à dévisser un minimum de 6 mm. la vis (24) qui comprime les rondelles coniques (22) contre les sièges (C-13). Ces 6 mm. sont dus au fait que la conicité des rondelles (22) est de 3 mm. chacune. Une fois ces 6 mm. libérés, nous pourrons déplacer la goupille (21) sur l'une des cinq positions définies (figure 6).

Pour fixer de nouveau le dispositif, il suffit simplement de mettre la goupille (21) dans une position (C-13), plus ou moins centrée sur l'une des cinq positions établies et effectuer la pose et le serrage bien connus de la vis (24) (ou fermeture rapide, le cas échéant).

On se rappellera les caractéristiques demandées et mentionnées sur la première page de la description.

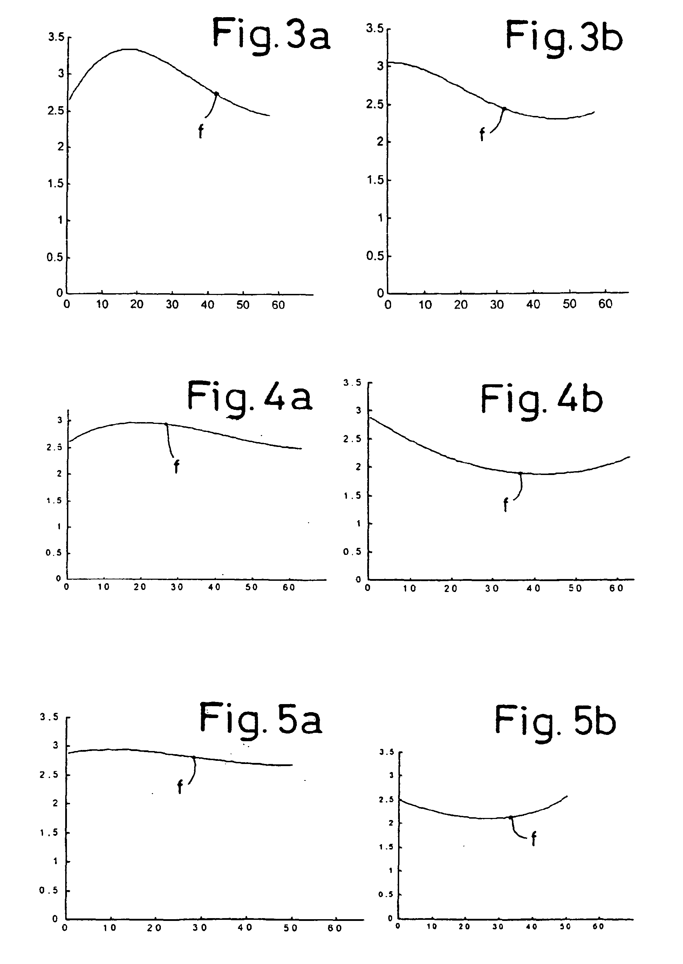

On constatera que les suspensions arrière connues (figures 3a-3b) ne remplissent pas les caractéristiques exigées.

Souvenons-nous que 3a-4a-5a ont un ancrage (C) vers l'avant et 3b-4b-5b un ancrage (C) vers l'arrière, la figure 3 étant connue et les figures 4 et 5 selon l'invention.

Figure 3a: Remarquez que, dans ce cas, il existe un relâchement très prononcé (le ratio passe de 2,6 à 3,4) sur les 20 mm. initiaux de la course de l'amortisseur (sur un total de 57 mm.). Il y a ensuite un durcissement progressif jusqu'en fin de course. Ça ne ressemble pas du tout à une droite.

Figure 3b: Dans ce cas, il arrive le contraire: on commence au-dessus de 3 et la courbe f est concave au début. Elle s'assoupit dans la partie initiale de la course pour subir un durcissement dans la partie finale. La variation du ratio est de 0,7.

Figure 4a: Initialement, le ratio augmente peu à peu, de sorte que la suspension s'assouplit et ensuite diminue, la suspension se durcit dans la partie finale de la course, ce qui en fait un système d'une grande sensibilité pour les ornières petites et moyennes, mais qui évite de « faire butée », en tombant de sauts plus grands, en raison du durcissement du système dans la dernière partie.

En aucun cas le 3 n'est atteint et on ne tend vers une droite.

Figure 4b: À présent, le ratio diminue peu à peu sur presque toute sa course (durcissemente) et elle est absolument convexe, ce qui rend la suspension plus rigide. Mais il faut constater qu'elle continue d'avoir le même ration dans la zone initiale que dans le cas antérieur, elle aura ensuite, dans la zone initiale "SAG", un comportement raisonnable et similaire au cas précédent, ce qui fait que nous aurons une sensibilité correcte pour de petites irrégularités.

Figure 5a: Le ratio est plus constant dans cette configuration qui est la préférable dans l'utilisation en descente. Son caractère linéaire (presque droite) permet un toucher fin et constant de l'axe arrière, ce qui est recherché d'ordinaire pour cette utilisation en descente.

Figure 5b: Le ratio a de nouveau une pente négative ("durcissement"). Ce comportement s'appelle progressif, en raison du durcissement progressif de la suspension, ce qui est positif quand on utilise cette position dans les montées. Autrement dit, ayant un comportement similaire, dans les premiers millimètres de la course, à la position de descente, elle acquiert rapidement un caractère plus rigide et plus agressif. Elle est également convexe.

## Revendications

1. Suspension arrière pour vélos, **se caractérisant par le fait qu'**elle comprend :
a) un cadre ayant une structure triangulaire avec un tube en forme de V (1), un tube selle (2) et un tube diagonal (3) à l'embranchement duquel on dispose l'axe pédalier (4);
b) un quadrilatère articulé, constitué par
b₁) un bras basculant (5) avec un point de pivotement (0) sur le tube diagonal (3), qui constitue le centre (0) de coordonnées cartésiennes des éléments suivants :
b₂) une petite bielle (7) de 40 mm. de long assemblée (A), de façon pivotante, par une extrémité, au bras basculant (5) et, par l'autre, assemblée (B) à
b₃) une grande bielle (8) de 108 mm. de long qui s'assemble (C) de façon pivotante, au cadre;
c) un amortisseur (9) relié par une extrémité à l'assemblage (B') de la petite bielle (7) avec la grande bielle (8) et, par l'autre extrémité, il s'assemble (B) au tube (1) en forme de V, à proximité du sommet du V et dans les coordonnées cartésiennes X = 131 mm. Y = 269'5 mm.
d) un corps tirant (10), qui est assemblé, par une extrémité, au bras basculant (5) et, par l'autre, à l'axe (D) de la roue arrière

2. Suspension arrière pour vélos, selon revendication antérieure, **se caractérisant par le fait que** l'assemblage (C) de la grande bielle (8) au cadre est un point d'ancrage supérieur, qui est un assemblage de course coulissant et pouvant être fixé à volonté dans différents sièges.

3. Suspension arrière pour vélos, selon la deuxième revendication, **se caractérisant par le fait que** l'assemblage (C) de course coulissant est formé par, au moins, une platine (11), qui dispose d'une fenêtre (12) inclinée sur la longueur de laquelle, on a pratiqué des sièges (C-13) coniques, où a lieu la fixation par serrage des éléments d'assemblage pivotant.

4. Suspension arrière pour vélos, selon la troisième revendication, **se caractérisant par le fait que** la platine (11) est assemblée au tube selle (2) et au tube (1) en forme de V au moyen d'un bossage (20).

5. Suspension arrière pour vélo, selon la troisième révendication, **se caractérisant par le fait que** le siège inférieur (C-13₁) de la platine (11) a pour coordonnées X = - 90 mm.; Y = 247 mm., coïncidant avec la position la plus en arrière de l'ancrage supérieur (C).

6. Suspension arrière pour vélos, selon la troisième revendication, **se caractérisant par le fait que** le siège supérieur (C-13₂) de la platine (11) a pour coordonnées X = -50 mm; Y = 280 mm., coïncidant avec la position la plus en avant de l'ancrage supérieur (C).

7. Suspension arrière pour vélos, selon les revendications antérieures, **se caractérisant par le fait que** l'amortisseur (9) est pneumatique, la distance OA entre le centre (0) des coordonnées et l'assemblage (A) pivotant entre le bras basculant (5) et la petite bielle (7) étant de 177 mm.

8. Suspension arrière pour vélos, selon la première revendication, **se caractérisant par le fait qu'**on a disposé plusieurs points possibles (A), (A') pour l'assemblage pivotant entre le bras basculant (5) et la petite bielle (7).

9. Suspension arrière pour vélos, selon la troisième revendication, **se caractérisant par le fait qu'**on dispose sur le siège (C-13) conique pour l'assemblage à ancrage supérieur d'un coussinet, une rondelle conique et une goupille, d'un côté, et une vis de serrrage sur la goupille, de l'autre.

## Claims

1. Rear bicycle suspension, **characterized** because it consists of:
a) a triangular structure framework with a V - shaped tube (1) a saddle tube (2) and a diagonal tube (3) in whose connection the pedal axle is found;
b) a jointed quadrilateral consisting of:
b₁) a tilted arm (5) with a pivotal point (0) over the diagonal tube (3) which creates the following elements as a centre (0) of Cartesian coordinates
b₂) a small 40mm long connecting rod (7) pivotally joined (A) at one end to the tilted arm (5) and at the other it joins with (B)
b₃) a large 108mm long connecting rod (8) which is pivotally joined (C) to the framework;
c) a shock absorber (9) joined at one end to joint (B') of the small connecting rod (7) with the large connecting rod (8) and at the other it joins (B) with the tube (1) in a V - shape in the proximity of the vertex of the V with the Cartesian coordinates X = 131mm Y = 269'5mm.
d) a brace (10) which connects with the tilted arm (5) at one end and the axle (D) of the rear wheel at the other.

2. Rear bicycle suspension, following the previous claims, **characterized** because the connection (C) of the large connecting rod (8) to the frame is an anchor point higher than a sliding length connection and optionally fixable with different saddles.

3. Rear bicycle suspension, following the second claim, **characterized** because the connection (C) of sliding length is formed over at least one suspension bracket (11) which has an inclined window (12) in whose length several conical seats (C- 13) have been created in which the pivotal connecting elements can be fixed with pressure.

4. Rear bicycle suspension, following the third claim, **characterized** because the suspension bracket (11) is joined to the saddle tube (2) and the V- shaped tube (1) by means of a projection (20).

5. Rear bicycle suspension, following the third claim, **characterized** because the lower seat (C-13₁) of the suspension bracket is in the coordinates X = 90mm; Y = 247mm which coincides which the position of the upper anchor point furthest to the rear (C).

6. Rear bicycle suspension, following the third claim, **characterized** because the upper seat (C- 13₂) of the suspension bracket is in the coordinates X = 50mm; Y = 280mm, which coincides with the position of the upper anchor point furthest to the front (C).

7. Rear bicycle suspension, following the first claim, **characterized** because the shock absorber (9) is pneumatic with the distance OA between the centre (0) of coordinates and the pivotal joint (A) between the tilted arm (5) and the small connecting rod (7) being 177mm.

8. Rear bicycle suspension, following the first claim, **characterized** because various possible points are available (A), (A') for the pivotal joint between the tilted arm (5) and the small connecting rod (7).

9. Rear bicycle suspension, following the third claim, **characterized** because a conical washer and a bolt on one side and a tightening screw over the bolt on the other are available over the conical seat (C-13) for the upper anchoring of a fitting.

## Patentansprüche

1. Hinterradaufhängung für Fahrräder, **dadurch gekennzeichnet, dass** sie aus folgenden Komponenten besteht:
a) Eine dreieckige Rahmenstruktur mit einem Rohransatz in V-Form (1), einem Aufnahmerohr für den Sitz (2) und einem diagonal angeordneten Rohr (3), an dessen Vergabelung die Achse für die Pedale (4) eingeführt wird.
b) Einem Gelenkviereck, das seinerseits aus folgenden Komponenten besteht:
b₁) Einem Schwenkarm (5) mit einem Schwenkpunkt (0) auf dem diagonal angeordneten Rohr (3), welcher den Mittelpunkt (0) der von den folgenden Komponenten gebildeten kartesischen Koordinaten bildet:
b₂) Einer kleinen Schubstange (7) mit 40 mm Länge, welche an einem ihrer Enden schwenkbar an einem Ende des Schwenkarms (5) angebunden ist (A) und an ihrem anderen Ende (B)
b₃) mit einer grossen Schubstange (8) von 108 mm Länge verbunden ist (B), welche ihreseits schwenkbar an dem obigen Rahmen angebunden ist (C);
c) Einem Stoßdämpfer (9), der an einem seiner Enden an der mit an der Schraubverbindung der kleinen Schubstange (7) mit der grossen Schubstange (8) verbunden ist (B') und an seinem anderen Ende in der Nähe des Scheitelpunkts des V's und in den kartesischen Koordinaten X = 131 mm und Y = 269,5 mm an dem V-förmigen Rohransatz (1) verschraubt ist (B).
d) Ein Zugkörper (10), der an einem seiner Enden an den Schwenkarm (5) und am anderen an die Achse (D) des Hinterrads angebunden ist.

2. Hinterradaufhängung für Fahrräder nach dem obigen Anspruch, **dadurch gekennzeichnet, dass** die Anbindung (C) der grossen Schubstange (8) an den Rahmen ein oberer Verankerungspunkt ist, welcher verstellbar ausgelegt ist und daher in unterschiedlichen Stellungen festgestellt werden kann.

3. Hinterradaufhängung für Fahrräder nach dem obigen zweiten Anspruch, **dadurch gekennzeichnet, dass** die verschiebbare Anbindung (C) an mindestens einer Pletine (11) erfolgt, die mit einer längs laufenden Aussparung (12) versehen ist, auf derer gesamten Länge konisch ausgebildete Aufnahmen (C-13) für die Befestigung unter Druck der schwenkbaren Verbindungselemente vorgesehen sind.

4. Hinterradaufhängung für Fahrräder nach dem obigen dritten Anspruch, **dadurch gekennzeichnet, dass** die genannte Pletine (11) über zweckentsprechend vorgesehene Beine (20) an das Rohr für den Fahrradsitz (2) einerseits und das V-förmige Rohr (1) angebunden ist.

5. Hinterradaufhängung für Fahrräder nach dem obigen dritten Anspruch, **dadurch gekennzeichnet, dass** die untere Aufnahme (C-13₁) auf den Koordinaten X = - 90 mm.; Y = 247 mm liegt und damit der am weitesten zurückgefahrenen Stellung der obigen Verankerung (C) entspricht.

6. Hinterradaufhängung für Fahrräder nach dem obigen dritten Anspruch, **dadurch gekennzeichnet, dass** die obere Aufnahme (C-13₂) der Pletine (11) auf den Koordinaten X = -50 mm; Y = 280 mm. liegt und damit der am weitesten vorgefahrenen Stellung der obigen Verankerung (C) entspricht.

7. Hinterradaufhängung für Fahrräder nach den obigen Ansprüchen, **dadurch gekennzeichnet, dass** der Stoßdämpfer (9) pneumatisch ist und die Distanz OA vom Mittelpunkt (0) der Koordinaten zur schwenkbaren Verbindung (A) zwischen dem Schwenkarm (5) und der kleinen Schubstange (7) 177 mm beträgt.

8. Hinterradaufhängung für Fahrräder nach dem obigen ersten Anspruch, **dadurch gekennzeichnet, dass** für die schwenkbare Verbindung zwischen dem Schwenkarm (5) und der kleinen Schubstange (7) verschiedene Punkte (A), (A') vorgesehen sind.

9. Hinterradaufhängung für Fahrräder nach dem obigen dritten Anspruch, **dadurch gekennzeichnet, dass** auf der konischen Aussparung (C-13) für die Anbindung der obigen Verankerung eine Buchse, eine konische Unterlegscheibe und auf einer Seite ein Stift und auf der anderen eine Druckschraube auf dem Stift vorgesehen sind.
